Europäisches Patentamt

(19) European Patent Office

Office européen des brevets

(11) Veröffentlichungsnummer: **0 015 317**
**A2**

(12) # EUROPÄISCHE PATENTANMELDUNG

(21) Anmeldenummer: **79104991.9**

(22) Anmeldetag: **07.12.79**

(51) Int. Cl.³: **G 05 B 19/04**

(30) Priorität: **05.02.79 DE 2904291**

(43) Veröffentlichungstag der Anmeldung: **17.09.80**
**Patentblatt 80/19**

(84) Benannte Vertragsstaaten: **AT BE DE FR GB IT LU NL**

(71) Anmelder: **Bosch-Siemens Hausgeräte GmbH Stuttgart, Patent- und Vertragswesen Hochstrasse 17, D-8000 München 80 (DE)**

(72) Erfinder: **Graf, Richard, Dipl.-Ing., Rieppelstrasse 18, D-1000 Berlin 13 (DE)**
Erfinder: **Klose, Siegfried, Teichgräberzeile 3, D-1000 Berlin 13 (DE)**
Erfinder: **Schäfer, Erhard, Dipl.-Ing., Stephanstrasse 33, D-1000 Berlin 41 (DE)**

(54) **Schaltungsanordnung zur Netzstromversorgung der elektrischen Ausrüstung eines Haushaltgerätes.**

(57) Mit einer Schaltungsanordnung zur Netzstromversorgung (220 V) der elektrischen Ausrüstung (47, 48) eines von einem elektronischen, über ein Netzgerät (3) stromversorgten Programmsteuergerät (1) steuerbaren Haushaltgeräts soll ein stand-by-Betrieb möglich sein, bei dem zwar das Programmsteuergerät ständig stromversorgt, aber die übrige elektrische Ausrüstung spannungslos ist und zum Einschalten der gesamten elektrischen Ausrüstung ein einfacher Tastendruck oder ein Berühren einer zur Programmeinstellung vorgesehenen Tastelektrode (21) genügt.

Die Lösung besteht darin, daß das Netzgerät (3) ständig mit der Netzleitung (41, 42) und das Programmsteuergerät (1) ständig mit dem Netzgerät (3) verbunden ist und daß ein vom Programmsteuergerät (1) betätigbares Relais (43) vorgesehen ist, das zwei Ausschaltkontakte (44, 45) für die Stromversorgungs-Hauptleitungen (41, 42) der übrigen elektrischen Ausrüstung (47, 48) hat.

Die Erfindung ist mit Vorteil bei Wasch-, Trocken- oder Geschirrspülautomaten bzw. bei programmgesteuerten Back- und Bratgeräten anwendbar.

BOSCH-SIEMENS HAUSGERÄTE GMBH     Hochstraße 17, 16.11.1979
Stuttgart                        8000 München 80


                    TZP 79/203 Ry/Wk



## Schaltungsanordnung zur Netzstromversorgung der elektrischen Ausrüstung eines Haushaltgerätes

Die Erfindung betrifft eine Schaltungsanordnung zur Netzstromversorgung der elektrischen Ausrüstung eines von einem elektronischen, über ein Netzgerät stromversorgten Programmsteuergerät steuerbaren Haushaltgeräts.

Bei üblicherweise aus dem 220 V-Netz betreibbaren Haushaltgeräten, die mit elektronischen Programmsteuergeräten ausgestattet sind, muß die gesamte elektrische Ausrüstung durch die Betätigung eines Netzschalters in Betrieb genommen werden. Sofern vom Anwender ausgewählte Programme elektronisch speicherbar sein sollen, erfordert dies besondere Vorkehrungen zur Erhaltung des Speicherinhaltes der elektronischen Programmspeicher. Entweder werden die Programmspeicher bei Trennung vom Netz mit Batteriestrom versorgt oder das für das elektronische Programmsteuergerät notwendigerweise vorgesehene Netzgerät ist zusammen mit der übrigen elektrischen Ausrüstung des Haushaltgerätes ständig mit den Netzleitungen verbunden, was den sicherheitstechnischen Vorschriften zuwider läuft.

Der Erfindung liegt die Aufgabe zugrunde, eine Schaltungsanordnung anzugeben, bei der ein sogenannter stand-by-Betrieb möglich ist. Dabei soll das elektronische Programmsteuergerät ständig stromversorgt sein, damit ein einfacher Tastendruck oder ein Berühren einer Tastelektrode genügt, um die gesamte elektrische, im stand-by-Betrieb spannungslose Ausrüstung des Haushaltgerätes an die Netzleitungen zu schalten.

Erfindungsgemäß wird diese Aufgabe dadurch gelöst, daß das Netzgerät ständig mit der Netzleitung und das Programmsteuergerät ständig mit dem Netzgerät verbunden ist und daß ein vom Programmsteuergerät betätigbares Relais vorgesehen ist, das zwei Ausschaltkontakte für die Stromversorgungs-Hauptleitungen der übrigen elektrischen Ausrüstung hat.

Bei Anwendung der Erfindung kann der übliche Netzschalter in der Bedienblende entfallen. Dadurch entfällt dann auch die zusätzliche Bedienungshandlung "Einschalten", weil beim Betätigen einer Programmtaste diese Funktion automatisch ausgeführt wird. Die Erfindung erlaubt ferner ein automatisches Abschalten der Netzleitungen von der übrigen elektrischen Ausrüstung, wenn das elektronische Programmsteuergerät eine Betriebsstörung erkannt hat, die durch betriebliche Arbeitsschritte niche mehr beseitigt werden kann.

Sofern gemäß einer Weiterbildung der Erfindung der kleinspannungsseitige Massepol des Netzgerätes und des Programmsteuergerätes mit einer der Stromversorgungs-Hauptleitungen der übrigen elektrischen Ausrüstung verbunden ist, kann eine Einstreuung einer für das elektronische Programmsteuergerät gefährlich hohen Spannung vermieden werden, da das Potentialniveau somit immer bekannt und beherrschbar ist.

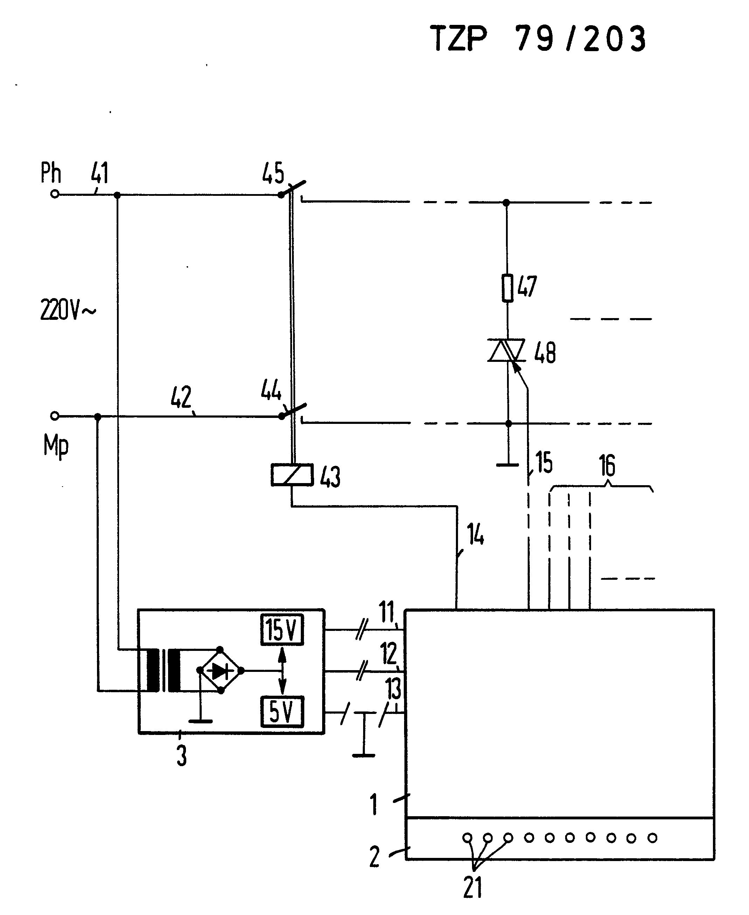

Anhand des in der Zeichnung dargestellten Ausführungsbeispiels ist die Erfindung nachstehend erläutert.

Die Zeichnung zeigt ein Blockschaltbild einer elektrischen
Ausrüstung eines Haushaltgerätes mit einem elektronischen
Programmsteuergerät 1, das nach bekannten Prinzipien beispielsweise unter Verwendung eines oder mehrerer Mikroprozessoren aufgebaut und nicht näher erläutert ist, da
es auf seine programmablaufbedingte Funktionsweise hier
nicht ankommt. Es ist über nicht dargestellte Koppelmittel mit einem Bedienfeld 2 verbunden, das beispielsweise Tasten 21 enthält, durch deren Betätigung ein gewünschter Programmablauf gewählt werden kann.

Das Programmsteuergerät 1 ist über Anschlüsse 11 bis 13
mit dem Kleinspannungsausgang eines Netzgerätes 3 verbunden, dessen Primärseite ständig mit den Netzleitungen 41
und 42 in Verbindung steht. Sobald also die Stifte Ph und
Mp des an die Netzleitung gekoppelten Steckers (nicht dargestellt) mit dem Netz (z.B. 220 V$\sim$ ) verbunden sind,
gibt das Netzgerät 3 an den Anschluß 11 beispielsweise
15 V und an den Anschluß 12 beispielsweise 5 V Gleichspannung gegenüber der Masseleitung 13.

Sodann steht das Programmsteuergerät 1 im sogenannten stand-
by-Betrieb, dessen Zustand durch die ständige Einschaltbereitschaft gekennzeichnet ist. Zu seiner Einschaltung bedarf es jedoch nicht eines galvanischen Verbindens seiner
Stromversorgungsleitungen mit dem Netz durch einen besonderen Schalter. Vielmehr wird beim Betätigen einer einen
gewünschten Programmablauf bestimmenden Taste 21 im Bedienfeld 2 sofort ein Einschaltsignal auf die Ausgangsleitung 14
des Programmsteuergerätes 1 gegeben. Dadurch wird ein
Relais 43 erregt, dessen beide Kontakte 44 und 45 die Netzleitungen 41 und 42 zur übrigen elektrischen Ausrüstung
des Haushaltgerätes durchschalten.

Stellvertretend für diese übrige elektrische Ausrüstung ist

- 4 -

hier nur symbolisch ein durch einen über die Ausgangsleitung 15 steuerbaren Halbleiter 48 ein- und ausschaltbarer Verbraucher in Form eines ohmschen Widerstandes 47 dargestellt. Selbstverständlich können hier noch mehr Verbraucher vorhanden sein, die etwa gleichartig von Signalen der weiteren Ausgangsleitungen 16 des Programmsteuergerätes 1 gesteuert werden können.

Die Netzleitung 42 ist mit der Masse des Netzgerätes 3 und des Anschlusses 13 des Programmsteuergerätes 1 verbunden. Dadurch kann sich gegenüber den galvanischen Verbindungen mit dem elektronischen Programmsteuergerät 1 keine schädliche Streuspannung auf den über die steuerbaren Halbleiter 48 verbundenen Netzleitungen 41 und 42 aufbauen. Dasjenige Potential der Netzleitung 42 ist dann gleichzeitig das interne Massepotential des elektronischen Programmsteuergerätes 1.

Sobald das elektronische Programmsteuergerät 1 eine nicht behebbare Betriebsstörung oder das Ende des gewählten Programmablaufs festgestellt hat, gibt es ein Ausschaltsignal auf die Ausgangsleitung 14 und schaltet damit das Relais 43 ab. Seine Kontakte 44 und 45 unterbrechen dann die Netzleitungen 41 und 42, so daß die übrige elektrische Ausrüstung 47, 48 wieder spannungslos wird, das elektronische Programmsteuergerät 1 jedoch im stand-by-Betrieb verharrt.

Die erfindungsgemäße Schaltungsanordnung ist mit Vorteil bei Haushalt- Wasch-, -Trocknen - und -Geschirrspülautomaten anwendbar. Sie kann aber auch bei programmgesteuerten Back- und Bratgeräten vorteilhaft verwendet werden.

1 Figur

2 Patentansprüche

### Patentansprüche

1. Schaltungsanordnung zur Netzstromversorgung der elektrischen Ausrüstung eines von einem elektronischen, über ein Netzgerät stromversorgten Programmsteuergerät steuerbaren Haushaltgerätes, d a d u r c h g e - k e n n z e i c h n e t , daß das Netzgerät (3) ständig mit der Netzleitung (41, 42) und das Programmsteuergerät (1) ständig mit dem Netzgerät (3) verbunden ist und daß ein vom Programmsteuergerät (1) betätigbares Relais (43) vorgesehen ist, das zwei Ausschaltkontakte (44, 45) für die Stromversorgungs-Hauptleitungen (41, 42) der übrigen elektrischen Ausrüstung (47, 48) hat.

2. Schaltungsanordnung nach Anspruch 1, dadurch gekennzeichnet, daß der kleinspannungsseitige Massepol (13) des Netzgerätes (3) und des Programmsteuergerätes (1) mit einer der Stromversorgungs-Hauptleitungen (42) der übrigen elektrischen Ausrüstung (47, 48) verbunden ist.

0015317

1/1

TZP 79/203